(19) Europäisches Patentamt / European Patent Office / Office européen des brevets

(11) **EP 4 806 971 A1**

(12) **EUROPEAN PATENT APPLICATION**
published in accordance with Art. 153(4) EPC

(43) Date of publication:
**16.09.2026 Bulletin 2026/38**

(21) Application number: **24888747.3**

(22) Date of filing: **06.11.2024**

(51) International Patent Classification (IPC):
***C09K 3/00*** *(2006.01)* ***C01G 41/00*** *(2006.01)*
***C08F 2/44*** *(2006.01)* ***C08F 292/00*** *(2006.01)*
***C08K 3/01*** *(2018.01)* ***C08K 3/22*** *(2006.01)*
***C08L 101/00*** *(2006.01)* ***C09C 1/00*** *(2006.01)*
***C09C 3/10*** *(2006.01)*

(52) Cooperative Patent Classification (CPC):
**C01G 41/00; C08F 2/44; C08F 292/00; C08K 3/01; C08K 3/22; C08L 101/00; C09C 1/00; C09C 3/10; C09K 3/00**

(86) International application number:
**PCT/JP2024/039491**

(87) International publication number:
**WO 2025/100454 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.11.2023 JP 2023191985**

(71) Applicant: **SUMITOMO METAL MINING CO., LTD.**
**Tokyo**
**105-8716 (JP)**

(72) Inventors:
- **FUJITA, Masahiko**
  **Ome-shi, Tokyo 198-8601 (JP)**
- **CHONAN, Takeshi**
  **Ome-shi, Tokyo 198-8601 (JP)**
- **TAKEUCHI, Maina**
  **Yonezawa-shi, Yamagata 992-8510 (JP)**
- **KAWAGUCHI, Seigou**
  **Yonezawa-shi, Yamagata 992-8510 (JP)**

(74) Representative: **Watermeyer, Nicholas**
**Withers & Rogers LLP**
**2 London Bridge**
**London SE1 9RA (GB)**

(54) **METHOD FOR PRODUCING ORGANIC-INORGANIC HYBRID INFRARED-ABSORBING PARTICLES AND ORGANIC-INORGANIC HYBRID INFRARED-ABSORBING PARTICLES**

(57) A method for producing organic-inorganic hybrid infrared-absorbing particles, includes: a dispersion liquid preparation step of mixing dispersion liquid raw materials including infrared-absorbing particles, a surfactant, and water to prepare a dispersion liquid; a polymerization raw material mixture liquid preparation step of mixing the dispersion liquid and a polymerization initiator to prepare a polymerization raw material mixture liquid; and a polymerization step of adding a coating resin raw material to the polymerization raw material mixture liquid to cause a polymerization reaction to proceed.



Processed by Luminess, 75001 PARIS (FR)

## Description

### TECHNICAL FIELD

The present invention relates to methods for producing organic-inorganic hybrid infrared-absorbing particles and to organic-inorganic hybrid infrared-absorbing particles.

### BACKGROUND OF THE INVENTION

Infrared-absorbing particles that absorb infrared rays can be used for various applications, such as heat-ray-shielding films and the like, and therefore various studies have been conducted on the infrared-absorbing particles.

For example, Patent Document 1 discloses infrared-shielding material fine particle dispersion in which infrared-shielding material fine particles are dispersed in a medium, the infrared-shielding material fine particles include tungsten oxide fine particles or tungsten composite oxide fine particles, or both tungsten oxide fine particles and tungsten composite oxide fine particles, and particle diameters of the infrared-shielding material fine particles are 1 nm or greater and 800 nm or less. According to the infrared-shielding material fine particle dispersion disclosed in Paten Document 1, it is possible to produce an infrared-shielding material fine particle dispersion having excellent optical properties, such as efficient shielding of sunlight, particularly light in a near-infrared region while maintaining transmittance with light in a visible light region.

According to the studies conducted by the inventors of the present invention, it has been found that infrared absorbing properties of the infrared-absorbing particles deteriorate when the infrared-absorbing particles are exposed to a chemical environment, such as a high-temperature acid, alkali, or the like.

Therefore, the inventors of the present invention have disclosed organic-inorganic hybrid infrared-absorbing particles having chemical resistance, and a method for producing the organic-inorganic hybrid infrared-absorbing particles in Patent Document 2.

### RELATED-ART DOCUMENT

Patent Document

Patent Document 1: International Publication No. WO 2005/037932
Patent Document 2: International Publication No. WO 2020/129919

### SUMMARY OF THE INVENTION

### PROBLEMS TO BE SOLVED BY THE INVENTION

The method for producing the organic-inorganic hybrid particles disclosed in Patent Document 2 uses an organic compound, i.e., an organic solvent, as a dispersion medium in a dispersion liquid preparation step.

In recent years, a reduction in environmental load has been desired. Thus, it is preferable to minimize use of an organic solvent in a production process and to use a dispersion medium, such as water or the like.

Accordingly, one aspect of the present invention aims to provide a method for producing organic-inorganic hybrid infrared-absorbing particles using water as a dispersion medium in a production process.

### MEANS FOR SOLVING THE PROBLEMS

According to one aspect of the present invention, a method for producing organic-inorganic hybrid infrared-absorbing particles includes: a dispersion liquid preparation step of mixing dispersion liquid raw materials including infrared-absorbing particles, a surfactant, and water to prepare a dispersion liquid; a polymerization raw material mixture liquid preparation step of mixing the dispersion liquid and a polymerization initiator to prepare a polymerization raw material mixture liquid; and a polymerization step of adding a coating resin raw material to the polymerization raw material mixture liquid to cause a polymerization reaction to proceed.

### EFFECTS OF THE INVENTION

According to one aspect of the present invention, there can be provided a method for producing organic-inorganic

hybrid infrared-absorbing particles using water as a dispersion medium in a production process.

BRIEF DESCRIPTION OF THE DRAWINGS

[Fig. 1] Fig. 1 is a schematic view of a crystal structure of a hexagonal tungsten composite oxide.
[Fig. 2] Fig. 2 is an explanatory diagram of changes in hydrodynamic diameter and zeta potential when a surfactant is added to an aqueous dispersion liquid of infrared-absorbing particles.
[Fig. 3A] Fig. 3A is an explanatory diagram depicting a process of adsorbing the surfactant on the surface of the infrared-absorbing particle.
[Fig. 3B] Fig. 3B is an explanatory diagram depicting the process of adsorbing the surfactant on the surface of the infrared-absorbing particle.
[Fig. 3C] Fig. 3C is an explanatory diagram depicting the process of adsorbing the surfactant on the surface of the infrared-absorbing particle.
[Fig. 4] Fig. 4 is an explanatory diagram depicting a process of disposing a coating resin on the surface of the infrared-absorbing particle.
[Fig. 5] Fig. 5 is a schematic cross-sectional view of the organic-inorganic hybrid infrared-absorbing particle according to one embodiment of the present disclosure.
[Fig. 6A] Fig. 6A is a transmission electron micrograph of the organic-inorganic hybrid infrared-absorbing particles obtained in Example 1 before the alkali resistance test.
[Fig. 6B] Fig. 6B is a transmission electron micrograph of the organic-inorganic hybrid infrared-absorbing particles obtained in Example 1 after the alkali resistance test.
[Fig. 7A] Fig. 7A is a transmission electron micrograph of the organic-inorganic hybrid infrared-absorbing particles obtained in Example 2 before the alkali resistance test.
[Fig. 7B] Fig. 7B is a transmission electron micrograph of the organic-inorganic hybrid infrared-absorbing particles obtained in Example 2 after the alkali resistance test.
[Fig. 8] Fig. 8 depicts absorption spectra of the dispersion liquid of the organic-inorganic hybrid infrared-absorbing particles obtained in Example 1 before and after the alkali resistance test.
[Fig. 9] Fig. 9 depicts absorption spectra of the dispersion liquid of the organic-inorganic hybrid infrared-absorbing particles obtained in Example 2 before and after the alkali resistance test.
[Fig. 10A] Fig. 10A is a pyrogram of toluene remaining in the organic-inorganic hybrid infrared-absorbing particles obtained in Example 3.
[Fig. 10B] Fig. 10B is a pyrogram of a toluene standard solution.
[Fig. 11] Fig. 11 depicts absorption spectra of the dispersion liquid of the infrared-absorbing particles obtained in Comparative Example 1 before and after the alkali resistance test.
[Fig. 12A] Fig. 12A depicts a flow of the method for producing the organic-inorganic hybrid infrared-absorbing particles according to one embodiment of the present disclosure.
[Fig. 12B] Fig. 12B depicts a flow of the method for producing the organic-inorganic hybrid infrared-absorbing particles according to one embodiment of the present disclosure.

DETAILED DESCRIPTION OF THE INVENTION

Embodiments for carrying out the present invention will be described with reference to drawings hereinafter, but the preset invention is not limited to the following embodiments, and various modifications and substitutions can be made to the following embodiments without departing from the scope of the present invention.

[Method for producing organic-inorganic hybrid infrared-absorbing particles]

As disclosed in Patent Document 2, the inventors of the present invention have conducted studies on a method for producing infrared-absorbing particles having chemical resistance. As a result, the present inventors have found that chemical resistance can be imparted by disposing an organic material, such as a resin or the like, directly onto at least a part of surfaces of infrared-absorbing particles to form organic-inorganic hybrid infrared-absorbing particles.
Infrared-absorbing particles are typically formed of an inorganic material, and it has not been known that an organic material, such as a resin or the like, is disposed at least a part of surfaces of the infrared-absorbing particles. Therefore, the inventors of the present invention have conducted further studies, and found a method for producing organic-inorganic hybrid infrared-absorbing particles capable of disposing an organic material on surfaces of infrared-absorbing particle.

However, the method for producing the organic-inorganic hybrid infrared-absorbing particles disclosed in Patent Document 2 uses an organic compound, which is an aromatic hydrocarbon, such as toluene, xylene, or the like, as a dispersion medium in the dispersion liquid preparation step. For the purpose of reducing environmental load or the like, the inventors of the present invention have conducted further studies on a method for producing organic-inorganic hybrid infrared-absorbing particles using water as a dispersion medium, and have completed the present invention.

The method for producing the organic-inorganic hybrid infrared-absorbing particles according to one embodiment of the present disclosure (may be referred to as the "present embodiment" hereinafter) will be described hereinafter.

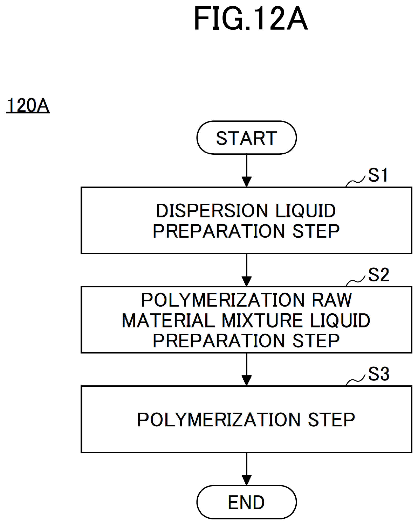

The method for producing the organic-inorganic hybrid infrared-absorbing particles of the present embodiment can include, as in the flow 120A depicted in Fig. 12A, a dispersion liquid preparation step S1, a polymerization raw material mixture liquid preparation step S2, and a polymerization step S3. Each step will be described hereinafter.

(1) Dispersion liquid preparation step (S1)

In the dispersion liquid preparation step, dispersion liquid raw materials including infrared-absorbing particles, a surfactant, and water are mixed so that a dispersion liquid can be prepared.

(1-1) Regarding dispersion liquid raw materials used in dispersion liquid preparation step

(1-1-1) Infrared-absorbing particles

(A) Regarding composition, etc.

In the dispersion liquid preparation step, various infrared-absorbing particles, for which improvement in chemical resistance, such as acid resistance or alkali resistance, is desired, can be used as the infrared-absorbing particles. As the infrared-absorbing particles, for example, infrared-absorbing particles that include any material including free electrons are preferably used, and infrared-absorbing particles that include any inorganic material including free electrons are more preferably used.

As the infrared-absorbing particles, infrared-absorbing particles including at least one selected from a tungsten oxide having oxygen deficiency and a tungsten composite oxide are particularly preferably used. In this case, specifically, the infrared-absorbing particles ideally include, for example, at least one selected from the group consisting of a tungsten oxide represented by a general formula $W_yO_z$ (W: tungsten, O: oxygen, and $2.2 \leq z/y \leq 2.999$) and a tungsten composite oxide represented by a general formula $M_xW_yO_z$ (the element M is at least one selected from the group consisting of H (hydrogen), He (helium), Li (lithium), Na (sodium), K (potassium), Rb (rubidium), Cs (cesium), Fr (francium), Be (beryllium), Mg (magnesium), Ca (calcium), Sr (strontium), Ba (barium), Ra (radium), Sc (scandium), Y (yttrium), La (lanthanum), Ce (cerium), Pr (praseodymium), Nd (neodymium), Pm (promethium), Sm (samarium), Eu (europium), Gd (gadolinium), Tb (terbium), Dy (dysprosium), Ho (holmium), Er (erbium), Tm (thulium), Yb (ytterbium), Lu (lutetium), Zr (zirconium), Cr (chromium), Mn (manganese), Fe (iron), Ru (ruthenium), Co (cobalt), Rh (rhodium), Ir (iridium), Ni (nickel), Pd (palladium), Pt (platinum), Cu (copper), Ag (silver), Au (gold), Zn (zinc), Cd (cadmium), Al (aluminum), Ga (gallium), In (indium), Tl (thallium), Si (silicon), Ge (germanium), Sn (tin), Pb (lead), Sb (antimony), B (boron), F (fluorine), P (phosphorus), S (sulfur), Se (selenium), Br (bromine), Te (tellurium), Ti (titanium), Nb (niobium), V (vanadium), Mo (molybdenum), Ta (tantalum), Re (rhenium), Hf (hafnium), Os (osmium), Bi (bismuth), and I (iodine), $0.001 \leq x/y \leq 1$, and $2.0 \leq z/y \leq 4.0$).

Generally, materials including free electrons are known to exhibit a reflection-absorption response to electromagnetic waves, which are of sunlight in a wavelength region of around 200 nm to 2,600 nm, due to plasma oscillations. Therefore, various materials including free electrons can be suitably used as the infrared-absorbing particles. The infrared-absorbing particles are preferably particles that are, for example, smaller than wavelengths of light, thereby reducing geometric scattering of light in a visible light region (wavelengths of 380 nm to 780 nm), leading to particularly high transparency with light in the visible light region.

In the present specification, "transparency" is used to describe "low scattering and high transmittance with respect to light in the visible light region".

In general, effective electrons are not present in a tungsten oxide ($WO_3$), and therefore the tungsten oxide exhibits low absorption-reflection properties in the infrared region and is not effective as the infrared-absorbing particles.

In contrast, $WO_3$ having oxygen deficiency or a tungsten composite oxide in which a positive element, such as Na or the like, is added to $WO_3$ is a conductive material, and is known to be a material including free electrons. Analysis of a single crystal or the like of these materials including free electrons suggests a response of the free electrons to light in the infrared region.

According to the studies conducted by the inventors of the present invention, there is a particularly effective region as an infrared-absorbing material within a specific part of the composition range of the tungsten and oxygen. By

having such a composition, a tungsten oxide or tungsten composite oxide, which is transparent to light in the visible light region, and has particularly strong absorption in the infrared region, can be provided.

Therefore, the tungsten oxide and the tungsten composite oxide, which are some of the materials of the infrared-absorbing particles suitably used in the method for producing the organic-inorganic hybrid infrared-absorbing particles of the present embodiment will be further described hereinafter.

(Tungsten oxide)

The tungsten oxide is represented by the general formula $W_yO_z$, as described above.

In the tungsten oxide represented by the general formula $W_yO_z$, as the composition range of tungsten and oxygen, the composition ratio (z/y) of oxygen to tungsten is preferably less than 3, and more preferably $2.2 \leq z/y \leq 2.999$. In particular, the composition ratio (z/y) is yet more preferably $2.45 \leq z/y \leq 2.999$. When it is necessary to distinguish the subscripts y and z in the general formula of the tungsten oxide from the subscripts x, y, and z of the general formula of the tungsten composite oxide, the subscripts y and z of the general formula of the tungsten oxide may be denoted as y1 and z1, respectively.

When the value of the above z/y is 2.2 or greater, unintended formation of a crystal phase of $WO_2$ in the tungsten oxide can be avoided, and chemical stability as a material can be obtained, and therefore particularly effective infrared-absorbing particles can be obtained.

Further, since the value of the above z/y is preferably less than 3, and more preferably 2.999 or less, a particularly sufficient amount of free electrons is generated to enhance absorption-reflection characteristics in the infrared region, and highly efficient infrared-absorbing particles can be obtained.

In addition, the so-called "Magnéli phase", which has a composition ratio represented by $2.45 \leq z/y \leq 2.999$, is chemically stable and has excellent light absorption properties in the near-infrared region, and therefore can be more preferably used as the infrared-absorbing material. Thus, the above z/y is more preferably $2.45 \leq z/y \leq 2.999$ as described above.

(Tungsten composite oxide)

The tungsten composite oxide is the above-described $WO_3$ to which the above-described element M is added.

By adding the element M to form the tungsten composite oxide, free electrons are generated in $WO_3$, strong absorption appears particularly in the near-infrared region due to the free electrons, and the tungsten composite oxide becomes effective as near-infrared-absorbing particles that can absorb light having wavelengths in the vicinity of 1,000 nm.

Specifically, when both control of an oxygen amount relative to the $WO_3$ and addition of the element M generating free electrons are used in the tungsten composite oxide, highly efficient infrared absorption properties can be exhibited. When the tungsten composite oxide in which the control of the oxygen amount relative to the $WO_3$ and addition of the element M generating free electrons are both used is represented by the general formula $M_xW_yO_z$, the relationships represented by $0.001 \leq x/y \leq 1$ and $2.0 \leq z/y \leq 4.0$ are preferably satisfied. In the general formula, M is the element M, W is tungsten, and O is oxygen. When it is necessary to distinguish the subscripts x, y, and z of the general formula of the tungsten composite oxide from the subscripts y and z of the general formula of the tungsten oxide, the subscripts x, y, and z of the general formula of the tungsten composite oxide may be denoted as x2, y2, and z2, respectively.

As described above, when the value of x/y representing the added amount of the element M is 0.001 or greater, a particularly sufficient amount of free electrons is generated in the tungsten composite oxide, and a high infrared absorption effect can be obtained. The larger the added amount of the element M, the larger the amount of free electrons supplied, which leads to an increase in the infrared absorption efficiency. However, the effect of increasing the infrared absorption efficiency is saturated when the value of x/y is approximately 1. In addition, the value of x/y is preferably 1 or less to avoid formation of an impurity phase in the infrared-absorbing particles including the tungsten composite oxide.

The element M that can be suitably used is as described above.

In view of particularly enhancing stability in $M_xW_yO_z$, the element M is more preferably at least one element selected from the group consisting of Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, and Re. From the viewpoint of optical properties as the infrared-absorbing particles including the tungsten composite oxide and improvement of weather resistance, the element M is more preferably at least one element selected from alkaline earth metal elements, transition metal elements, elements of the Group 4B, and elements of the Group 5B.

As for the value of z/y representing the added amount of oxygen, the same mechanism as that of the tungsten oxide represented by $W_yO_z$ described above applies to the tungsten composite oxide represented by the $M_xW_yO_z$. In the tungsten composite oxide, free electrons are supplied by the above-described added amount of the element M, even when

$z/y = 3.0$, or the added amount of the oxygen is excessive and exceeds 3.0. Therefore, $2.0 \leq z/y \leq 4.0$ is preferable, $2.2 \leq z/y \leq 4.0$ is more preferable, and $2.45 \leq z/y \leq 4.0$ is yet more preferable.

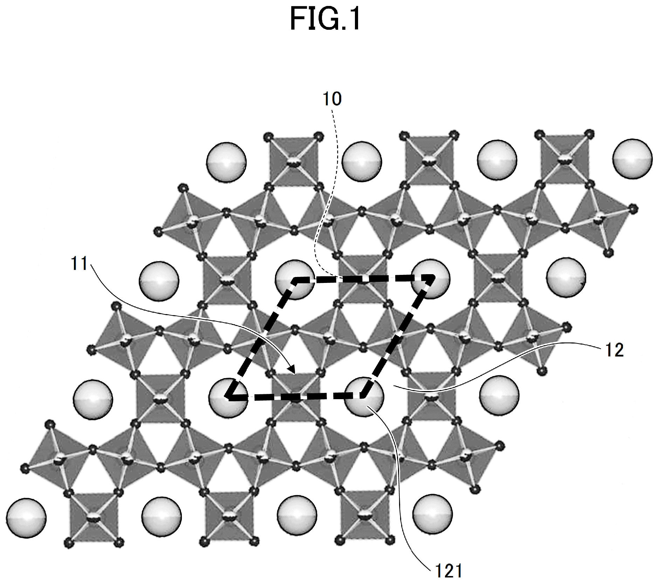

In the case where the tungsten composite oxide has a hexagonal crystal structure, transmittance of the infrared-absorbing particles including the tungsten composite oxide for light in the visible light region improves, and absorption of light in the infrared region improves. The hexagonal crystal structure of the tungsten composite oxide will be described with reference to Fig. 1 that is a schematic plan view of the hexagonal crystal structure.

Fig. 1 illustrates a projection view of the crystal structure of the tungsten composite oxide having a hexagonal crystal structure as viewed in the (001) direction, and the dotted line indicates a unit cell 10.

In Fig. 1, six octahedrons 11 composed of $WO_6$ units are assembled to form a hexagonal void 12. In the void 12, an element 121 serving as the element M is disposed to form one unit, and a large number of such units are assembled to form a hexagonal crystal structure.

In order to improve light transmission in the visible light region and light absorption in the infrared region, the tungsten composite oxide may include the unit structure described with reference to Fig. 1, and the tungsten composite oxide may be crystalline or amorphous.

When the positive ions of the element M are added to and are present in the above hexagonal voids, light transmission in the visible light region improves, and light absorption in the infrared region improves. Generally, when the element M having a large ion radius is added, the hexagonal crystal is easily formed. Specifically, when at least one selected from the group consisting of Cs, K, Rb, Tl, In, Ba, Li, Ca, Sr, Fe, and Sn is added as the element M, the hexagonal crystal is easily formed. Of course, an element other than the above can be added, as long as the above-described element M is present in the hexagonal void formed by the $WO_6$ units, and the element M is not limited to the above-described elements.

For forming a uniform crystal structure of the hexagonal tungsten composite oxide, the added amount of the element M determined as the value of x/y in the above-described general formula is preferably 0.2 or greater and 0.5 or less, and more preferably 0.33. When the value of x/y is 0.33, it is assumed that the element M is disposed in all of the hexagonal voids.

In addition to the hexagonal crystals, the infrared-absorbing particles including a tetragonal or cubic tungsten composite oxide also have sufficiently effective infrared absorption properties. The absorption position in the infrared region tends to change depending on the crystal structure. The absorption position tends to shift toward the long wavelength side in the order of cubic crystal < tetragonal crystal < hexagonal crystal. In addition, the light absorption in the visible light region decreases along with the above change in the absorption position in the order of the hexagonal crystal, the tetragonal crystal, and the cubic crystal. Accordingly, the hexagonal tungsten composite oxide is preferably used for applications that transmit more visible light and block more infrared light. However, the tendency of the optical properties described herein is merely a generic tendency, and changes depending on a type and added amount of the element M, and the oxygen amount, and the present invention is not limited to the above.

The infrared-absorbing particles including the tungsten oxide or the tungsten composite oxide have large absorption of light in the near-infrared region, particularly, in the vicinity of the wavelength of 1,000 nm, and therefore the color tone of the transmitted light is often blue to green.

(B) Dispersed particle size

In addition, the dispersed particle size of the infrared-absorbing particles can be selected depending on the purpose of use.

First, for applications where retention of transparency is desired, the infrared-absorbing particles preferably have a dispersed particle size of 800 nm or less. This is because the particles with the dispersed particle size of 800 nm or less do not completely block light by scattering, can retain visibility in the visible light region, and at the same time, can highly efficiently retain transparency. In the case where transparency in the visible light region is important, further reduction in light scattering by the particles is preferably considered.

In the case where reduction in light scattering by the particles is important, the dispersed particle size is preferably 200 nm or less, and more preferably 100 nm or less. This is because, when the dispersed particle size of the particles is small, scattering of light in the visible light region due to geometric scattering or Mie scattering is reduced, and therefore a phenomenon where the infrared-absorbing film appears like frosted glass to lose clear transparency can be avoided. Specifically, when the dispersed particle size is 200 nm or less, the geometric scattering or Mie scattering is reduced, and scattering occurs in the mode of Rayleigh scattering. Since an amount of light scattered by the particles is reduced in proportion to the sixth power of the particle size in the Rayleigh scattering mode, the light scattering is reduced along with the reduction in the dispersed particle size, which in turn improves transparency.

Further, the dispersed particle size is preferably 100 nm or less because scattered light significantly decreases. In order to avoid light scattering, a smaller dispersed particle size is preferable.

The lower limit value of the dispersed particle size of the infrared-absorbing particles is not particularly limited, but

the dispersed particle size is, for example, preferably 1 nm or greater because the infrared-absorbing particles can be easily manufactured in the industrial manner.

By setting the dispersed particle size of the infrared-absorbing particles to 800 nm or less, the infrared-absorbing particle dispersion liquid, in which the infrared-absorbing particles are dispersed in a medium, can have a visible light transmission of 85% or less and a haze of 30% or less. By setting the haze to 30% or less, the infrared-absorbing particle dispersion liquid can be prevented from appearing like frosted glass, and particularly clear transparency can be obtained.

The dispersed particle size of the infrared-absorbing particles can be measured using an ELS-8000 manufactured by Otsuka Electronics Co., Ltd. based on the dynamic light scattering method.

(Crystallite size)

The crystallite size of the infrared-absorbing particles is also not particularly limited. From the viewpoint of exhibiting excellent infrared absorption properties, the crystallite size of the infrared-absorbing particles is preferably 1 nm or greater and 200 nm or less, more preferably 1 nm or greater and 100 nm or less, and yet more preferably 10 nm or greater and 70 nm or less. For the measurement of the crystallite size, measurement of an X-ray diffraction pattern by powder X-ray diffraction ($\theta$-$2\theta$ method) and analysis by the Rietveld method can be used. The measurement of the X-ray diffraction pattern can be performed, for example, using a powder X-ray diffractometer "X'Pert-PRO/MPD" manufactured by Malvern PANalytical, Spectris Co., Ltd., or the like.

(1-1-2) Surfactant

The surfactant can be added for the purpose of inhibiting aggregations of the infrared-absorbing particles and dispersing the infrared-absorbing particles in the prepared dispersion liquid. Thus, the surfactant can also be referred to as a dispersant.

The surfactant may be any of a cationic surfactant, an anionic surfactant, a nonionic surfactant, an amphoteric surfactant, or the like, and is not particularly limited.

Examples of the cationic surfactant include alkyl amine salts, ammonium compounds, and the like.

Examples of the anionic surfactant include acid salts, ester salts, and the like.

Examples of the nonionic surfactant include various esters, various ethers, various ester ethers, alkanol amide, and the like.

Examples of the amphoteric surfactant include various amino acids, various sarcosine acids, and the like.

As the surfactant, for example, at least one selected from the above-described materials can be used.

A lipophilic (hydrophobic) moiety of the surfactant preferably includes an alkyl group. Thus, the surfactant preferably includes an alkyl group. The number of carbon atoms in the alkyl group is not particularly limited, and may be, for example, 1 or greater and 20 or less.

Among the above surfactants, a cationic surfactant is preferably used as the surfactant, from the view point of particularly easy formation of the organic-inorganic hybrid infrared-absorbing particles by dispersing the infrared-absorbing particles in a dispersion medium.

In the case where a cationic surfactant is used as the surfactant, an ammonium compound is preferably used, and a quaternary ammonium salt is more preferably used as the cationic surfactant from the viewpoint of particularly increasing the dispersibility of the infrared-absorbing particles in the dispersion medium.

The cationic surfactant may include a base. A type of the base included in the cationic surfactant is not particularly limited. For example, the base preferably includes at least one selected from the group consisting of halogen elements, i.e., F (fluorine), Cl (chlorine), Br (bromine), and I (iodine).

In particular, when a cationic surfactant is used as the surfactant, alkyltrimethylammonium chloride is preferably used. The number of carbon atoms in the alkyl group of alkyltrimethylammonium chloride is not particularly limited, and may be, for example, 8 or greater and 20 or less.

When alkyltrimethylammonium chloride is used as the surfactant, for example, at least one selected from the group consisting of dodecyltrimethylammonium chloride (DTAC), cetyltrimethylammonium chloride (CTAC), and the like is more preferably used as the alkyltrimethylammonium chloride.

The surfactant is preferably added to the extent that the infrared-absorbing particles are hydrophobized and can be dispersed in the dispersion medium. Thus, the added amount of the surfactant can be selected according to a type, particle size, added amount, or the like of the infrared-absorbing particles, and is not particularly limited. In addition, as described below, the surfactant can be added multiple times while monitoring the dispersion state of the infrared-absorbing particles.

For example, the surfactant can be added so that a concentration of the surfactant is 1 percent by mass or greater and 20 percent by mass or less relative to the infrared-absorbing particles.

(1-1-3) Water

The water may be any water that can disperse the above-described infrared-absorbing particles and the above-described surfactant to form an aqueous dispersion liquid. For example, pure water or ultrapure water can be used.

In the dispersion liquid preparation step, an organic solvent, such as benzene, toluene, xylene, ethylbenzene, and the like, is preferably not added. The organic solvent included in the dispersion liquid raw materials is preferably 10 percent by mass or less, more preferably 5 percent by mass or less, and may be 0.

In the present specification, a water-soluble organic solvent, such as alcohol, ketone, and the like, is not defined as the organic solvent, unless otherwise specified. Accordingly, the dispersion liquid raw materials may include the above water-soluble organic solvent.

(1-2) Regarding operation at dispersion liquid preparation step

In the dispersion liquid preparation step, the infrared-absorbing particles, the surfactant, and water, which are the dispersion liquid raw materials, are mixed to prepare a dispersion liquid.

In the dispersion liquid preparation step, a dispersion liquid in which the infrared-absorbing particles are dispersed in water serving as a dispersion medium can be prepared. The infrared-absorbing particles are not necessarily completely dispersed, and for example, some of the infrared-absorbing particles may be aggregated.

In the dispersion liquid preparation step, the infrared-absorbing particles may be pulverized to adjust the particle size of the infrared-absorbing particles when the dispersion liquid raw materials are mixed. Specifically, in the dispersion liquid preparation step, the dispersion liquid raw materials may be mixed while pulverizing the infrared-absorbing particles using a pulverizing device.

The pulverizing device is not particularly limited, and may be any device that can pulverize the infrared-absorbing particles. As the pulverizing device, for example, at least one selected from the group consisting of a bead mill, a ball mill, a sand mill, a paint shaker, an ultrasonic homogenizer, a high-pressure emulsifying and dispersing device, which is a high-pressure homogenizer, and the like can be used. In particular, a medium stirring mill, such as a bead mill, a ball mill, a sand mill, or a paint shaker, using a medium, such as beads, balls, or Ottawa sand, is more preferably used as the pulverizing device. This is because use of the medium stirring mill can achieve a desired dispersed particle size of the infrared-absorbing particles within a particularly short time, which is preferable from the viewpoint of increased productivity and inhibition of impurity contamination. As the pulverizing device, a paint shaker which can particularly easily process the particles is yet more preferably used.

In addition, as described above, the surfactant may be added multiple times in the dispersion liquid preparation step.

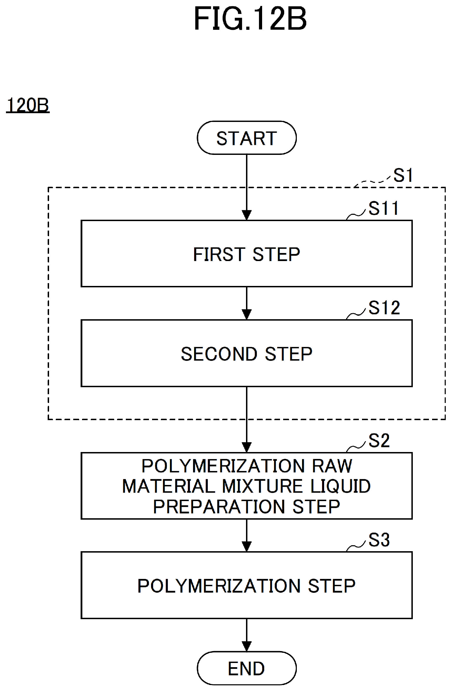

Thus, as in the flow 120B depicted in Fig. 12B, the dispersion liquid preparation step S1 can include, for example, the following first mixing step S11 and the following second mixing step S12.

In the first mixing step, the dispersion liquid raw materials, i.e., the infrared-absorbing particles, the surfactant, and the water, are mixed so that a precursor dispersion liquid can be prepared.

In the second mixing step, the surfactant is further added to the precursor dispersion liquid obtained in the first mixing step so that a dispersion liquid can be prepared.

Specifically, the surfactant can be added separately in the first mixing step and the second mixing step. The surfactant added in the first mixing step and the surfactant added in the second mixing step may be different or the same.

By adding the surfactant separately in the first mixing step and the second mixing step, an appropriate amount of the surfactant can be added, while monitoring the dispersion state of the infrared-absorbing particles in the dispersion liquid. Therefore, the infrared-absorbing particles can be assuredly dispersed in the dispersion liquid, while preventing the added amount of the surfactant from becoming excessive or too small.

In the first mixing step, the dispersion liquid raw materials may be mixed while pulverizing the infrared-absorbing particles, for example, using a pulverizing device, as described above. In the second mixing step, the infrared-absorbing particles can be pulverized by the pulverizing device following the first mixing step, but it is preferable that excessive pulverization is not performed because the particle size of the infrared-absorbing particles preferably does not change so that an appropriate amount of the surfactant can be added in the second mixing step. In particular, it is more preferable that pulverization of the infrared-absorbing particles is not performed in the second mixing step.

In the dispersion liquid preparation step, the surfactant may be added, while monitoring the dispersion state of the infrared-absorbing particles. In the case where the dispersion liquid preparation step is performed by being divided into the above-described first mixing step and second mixing step, the surfactant may be added in the second mixing step, while monitoring the dispersion state of the infrared-absorbing particles.

A method for monitoring the dispersion state of the infrared-absorbing particles in the dispersion liquid preparation step or the second mixing step is not particularly limited. For example, the dispersion state of the infrared-absorbing particles can be monitored by measuring an average particle size or potential of the infrared-absorbing

particles in the dispersion liquid or the precursor dispersion liquid.

Therefore, for example the dispersion state of the infrared-absorbing particles may be monitored by measuring a number average particle diameter of the infrared-absorbing particles to monitor the infrared-absorbing particles in the dispersion liquid preparation step or the second mixing step. The measurement of the number average particle diameter is not particularly limited to any principle, and for example, a device capable of measuring a number average particle diameter of the infrared-absorbing particles can be used. The device for measuring the number average particle diameter is preferably a device capable of measuring a particle size of several nanometers to several hundred nanometers. In particular, the device for measuring the number average particle diameter is more preferably a device that can measure a particle size of particles that are fine enough to enable confirmation that the surfactant is adsorbed to the surface of the infrared-absorbing particles as a saturated bilayer, and the infrared-absorbing particles are dispersed in the dispersion liquid. Therefore, as the device for measuring the number average particle diameter, for example, a particle size measuring device according to a dynamic light scattering analysis method using a light scattering method is more preferable.

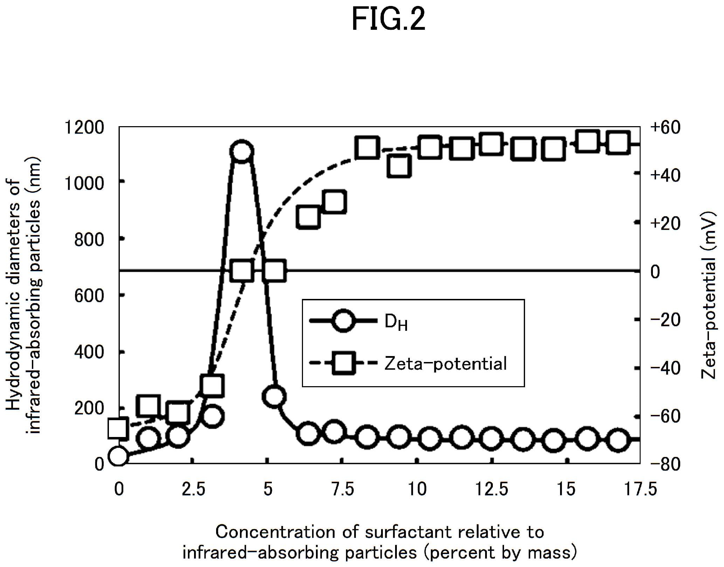

Fig. 2 depicts a change in a hydrodynamic diameter ($D_H$) and zeta potential of the infrared-absorbing particles, when cesium tungsten oxide particles serving as the tungsten composite oxide particles are used as the infrared-absorbing particles, and a surfactant is added to a dispersion liquid, in which the infrared-absorbing particles are dispersed in water. The hydrodynamic diameter is calculated using the particle size determined by the dynamic light scattering method. As the surfactant, cetyltrimethylammonium chloride (CTAC) is used.

The horizontal axis of the graph depicted in Fig. 2 represents a concentration of the surfactant relative to the infrared-absorbing particles, i.e., a mass ratio of the added amount of the surfactant.

As depicted in Fig. 2, as the added amount of the surfactant increases, the zeta potential rapidly increases from negative to 0, which indicates rapid aggregation and precipitation of the infrared-absorbing particles so that the hydrodynamic diameter ($D_H$) becomes the maximum. When the addition of the surfactant is further continued, the zeta potential becomes positive (plus) and the hydrodynamic diameter ($D_H$) rapidly decreases, which indicates that the infrared-absorbing particles are dispersed.

From the above results, for example, the zeta potential of the dispersion liquid or the precursor dispersion liquid can also be used as the evaluation method of the dispersion state of the infrared-absorbing particles.

The state when the surfactant is added to the above aqueous dispersion liquid of the infrared-absorbing particles is considered to be as follows.

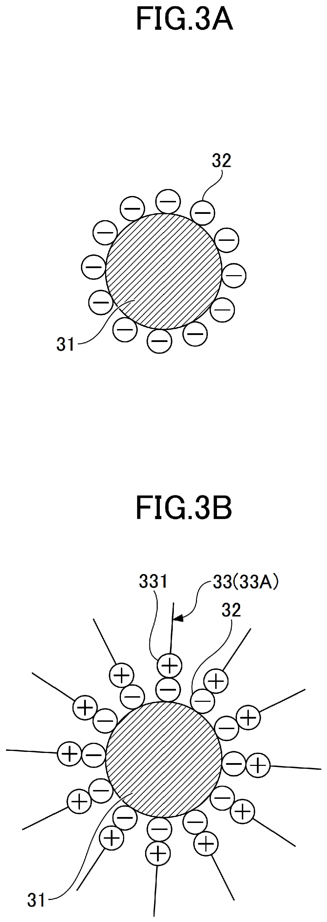

As illustrated in Fig. 3A, when the surfactant is not added, it is assumed that the infrared-absorbing particles 31 are negatively charged in water. In Fig. 3A, the negative charges 32 are schematically depicted as circles with minus signs.

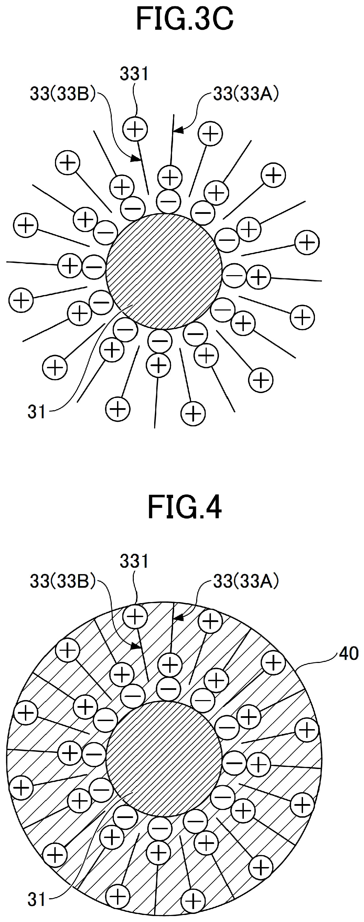

In the case where a cationic surfactant is used as the surfactant, as the surfactant 33 is added to the dispersion liquid including the infrared-absorbing particles 31, the surfactant 33 (33A) is adsorbed on surfaces of the infrared-absorbing particles 31 to hydrophobize the surfaces, as depicted in Fig. 3B. At the time of the addition of the cationic surfactant, it is assumed that positively charged hydrophilic groups 331 of the surfactant 33 (33A) are adsorbed on the surfaces of the infrared-absorbing particles 31. In Fig. 3B and Fig. 3C, the positively charged hydrophilic groups 331 are schematically depicted as circles with plus signs.

As the surfactant is further added, it is assumed that the surfactant 33 (33B) with hydrophilic groups 331 facing the water side is arranged due to hydrophilic interactions to form a double layer (bilayer) of the surfactant 33 as depicted in Fig. 3C. Therefore, it is considered that the zeta potential becomes positive, and the infrared-absorbing particles repel one another to disperse the infrared-absorbing particles again.

Thus, for example, in the dispersion liquid preparation step, the added amount of the surfactant is selected so that the zeta potential of the dispersion liquid becomes positive after adding the surfactant to the dispersion liquid. In addition, in the case where the dispersion liquid preparation step is performed by being divided into the above-described first mixing step and second mixing step, the added amount of the surfactant may be selected so that the zeta potential of the resultant dispersion liquid becomes positive after adding the surfactant to the precursor dispersion liquid in the second mixing step.

The potential of the infrared-absorbing particles after the adsorption of the surfactant varies depending on a type of the surfactant for use or the like. Therefore, a preliminary test or the like is performed to measure the zeta potential in a state where the infrared-absorbing particles are dispersed, and an added amount of the surfactant can be selected to achieve the zeta potential based on the result of the preliminary test.

(2) Polymerization raw material mixture liquid preparation step

In the polymerization raw material mixture liquid preparation step, the dispersion liquid and a polymerization initiator are mixed so that a polymerization raw material mixture liquid can be prepared.

(2-1) Regarding polymerization initiator

The polymerization initiator is not particularly limited, and any material that can polymerize a coating resin raw

material in the polymerization raw material mixture liquid in the below-described polymerization step can be used.

As the polymerization initiator, for example, one or more selected from various polymerization initiators, such as a radical polymerization initiator, an ionic polymerization initiator, and the like, can be used, but the polymerization initiator is not particularly limited.

Examples of the radical polymerization initiator include azo compounds, dihalogens, organic peroxides, and the like. In addition, redox initiators including a combination of an oxidizing agent and a reducing agent, such as a combination of hydrogen peroxide and an iron (II) salt, a combination of persulfate and sodium sulfite, and the like, can also be included in the examples. The radical polymerization initiator may be a non-ionic (nonionic) polymerization initiator or a cationic polymerization initiator.

Examples of the ionic polymerization initiator include: nucleophilic agents, such as n-butyllithium; electrophilic agents, such as protonic acids, Lewis acids, halogen molecules, and carbocations; and the like.

As the polymerization initiator, for example, at least one selected from the group consisting of 2,2'-azobisisobutyronitrile (AIBN), potassium peroxodisulfate (KPS), 2,2'-azobis(2-methylpropionamidine) dihydrochloride (V-50), 2,2'-azobis(2-methyl-N-(2-hydroxyethyl)propionamide) (VA-086), and the like can suitably be used.

The added amount of the polymerization initiator is not particularly limited and may be appropriately selected. The added amount of the polymerization initiator can be selected depending on a type of the coating resin raw material or the polymerization initiator, a ratio between an added amount of the coating resin raw material and the added amount of the infrared-absorbing particles, and the like. For example, the added amount of the polymerization initiator is preferably 0.01 mol% or greater and 1,000 mol% or less relative to the coating resin raw material, because organic-inorganic hybrid infrared-absorbing particles in which the infrared-absorbing particles are sufficiently coated with a coating resin can be easily obtained. The added amount of the polymerization initiator relative to the coating resin raw material is more preferably 0.001 mol% or greater and 100 mol% or less, and yet more preferably 0.01 mol% or greater and 10 mol% or less.

The polymerization initiator may be directly added to and mixed with the dispersion liquid, or may be added to the dispersion liquid after being partially or entirely dissolved in water or the like. In the polymerization raw material mixture liquid preparation step, an organic solvent is preferably not added to the dispersion liquid.

(3) Polymerization step

In the polymerization step, a coating resin raw material can be added to the polymerization raw material mixture liquid to cause a polymerization reaction to proceed.

By performing the polymerization step, a coating resin can be disposed to cover at least a part of surfaces of the infrared-absorbing particles.

(3-1) Regarding coating resin raw material

The coating resin raw material constitutes a coating resin disposed on at least a part of the surfaces of the infrared-absorbing particles. Thus, the coating resin raw material can be selected from various monomers or the like that can form a desired coating resin by polymerization.

The coating resin is not particularly limited, and may be, for example, at least one resin selected from the group consisting of thermoplastic resins, thermoset resins, photocurable resins, and the like.

Examples of the thermoplastic resins include polyester resins, polycarbonate resins, acrylic resins, polystyrene resins, polyamide resins, vinyl chloride resins, olefin resins, fluororesins, polyvinyl acetate resins, thermoplastic polyurethane resins, acrylonitrile butadiene styrene resins, polyvinyl acetal resins, acrylonitrile-styrene copolymer resins, ethylene-vinyl acetate copolymer resins, and the like.

Examples of the thermoset resins include phenol resins, epoxy resins, melamine resins, urea resins, unsaturated polyester resins, alkyd resins, thermoset polyurethane resins, polyimide resins, silicone resins, and the like.

Examples of the photocurable resins include resins cured by irradiation with any light of ultraviolet rays, visible light, and infrared rays, and the like.

The coating resin particularly preferably includes at least one selected from the group consisting of a polyester resin, a polycarbonate resin, an acrylic resin, a polystyrene resin, a polyamide resin, a vinyl chloride resin, an olefin resin, a fluororesin, a polyvinyl acetate resin, a polyurethane resin, an acrylonitrile butadiene styrene resin, a polyvinyl acetal resin, an acrylonitrile-styrene copolymer resin, an ethylene-vinyl acetate copolymer resin, a phenol resin, an epoxy resin, a melamine resin, a urea resin, an unsaturated polyester resin, an alkyd resin, a polyimide resin, and silicone resin. As the above polyurethane resin, both thermoplastic polyurethane and thermoset polyurethane can be used.

As the coating resin, the photocurable resin can also be suitably used. As the photocurable resin, a resin that is cured by irradiation with any light of ultraviolet rays, visible light, or infrared rays can be suitably used as described above.

Among the above, the coating resin is preferably a resin to which a radical polymerization method can be applied, and more preferably includes, for example, a polystyrene resin. In the case where the coating resin is polystyrene, styrene

can be used as the coating resin raw material.

(3-2) Regarding other optional additive components

The coating resin may or may not be crosslinked. In the case where the coating resin is crosslinked, a crosslinking agent can be added to the dispersion liquid in the polymerization step or the polymerization raw material mixture liquid preparation step. As the crosslinking agent, a polyfunctional vinyl monomer, such as divinyl benzene, ethylene glycol dimethacrylate, and the like, can be used.

In the polymerization step, polymerization of the coating resin raw material is performed to dispose the coating resin on a least a part of surfaces of the infrared-absorbing particles.

(3-3) Regarding operation in polymerization step

In the polymerization step, specific conditions for performing a polymerization reaction are not particularly limited. The polymerization reaction can be allowed to proceed by adding the coating resin raw material to the polymerization raw material mixture liquid, and adjusting the polymerization conditions according to the coating resin raw material.

It is considered that, by performing the polymerization step, the surfactant 33 adsorbed on the surfaces of the infrared-absorbing particles 31 depicted in Fig. 3C and

Fig. 4 is distributed, the coating resin raw material is disposed in the hydrophobic force field, which is the region where the bilayer is formed, and emulsification polymerization occurs in the field. Thus, as illustrated in Fig. 4, a state in which the infrared-absorbing particle 31 is covered with the coating resin 40 is created.

In the polymerization step, the coating resin raw material may be added to the polymerization raw material mixture liquid multiple times. Since the coating resin raw material is added to the polymerization raw material mixture liquid multiple times, a rapid polymerization reaction of the added coating resin raw material can be inhibited, and therefore aggregation of generated organic-inorganic hybrid infrared-absorbing particles or the like can be inhibited. In addition, the coating resin raw material can be prevented from being polymerized before covering the infrared-absorbing particle by adding the coating resin raw material to the polymerization raw material mixture liquid multiple times.

A method for adding the coating resin raw material to the polymerization raw material mixture liquid is not particularly limited. For example, the coating resin raw material is prepared as a raw material liquid in a container separate from the polymerization raw material mixture liquid, and the raw material liquid can be added to the polymerization raw material mixture liquid.

The addition of the coating resin raw material to the polymerization raw material mixture liquid multiple times is not limited to, for example, a case where the predetermined coating resin raw material is added every time a predetermined time elapses, i.e., a case where the addition conditions are constant, and may be a case where the time interval of addition or the added amount may change with time.

In addition, in the polymerization step, the coating resin raw material may be continuously (consistently) added to the polymerization raw material mixture liquid at a consistent rate over a predetermined time. Specifically, the coating resin raw material can be continuously added to the polymerization raw material mixture liquid during the polymerization step. The duration for adding the coating resin raw material during the polymerization step is not particularly limited. For example, the coating resin raw material can be added, for example, during 50% or greater and 100% or less of the entire duration of the polymerization step. The addition of the coating resin raw material at the constant rate during the polymerization step does not intend to indicate that the addition rate is not allowed to change, and means that the addition rate is not intentionally varied. Thus, for example, a case where the addition rate of the coating resin raw material varies within the range of $\pm$20% based on the median value can be determined as the addition at the constant rate.

(4) Regarding other optional steps

(4-1) Oxygen reduction step

The method for producing the organic-inorganic hybrid infrared-absorbing particles of the present embodiment may include an oxygen reduction step of reducing an amount of oxygen included, i.e., dissolved, in the polymerization raw material mixing liquid after the polymerization raw material mixture liquid preparation step and before the polymerization step.

A specific method for operating the oxygen reduction step is not particularly limited. For example, the polymerization raw material mixture liquid is stirred in an inert gas atmosphere, while cooling, thereby reducing the dissolved oxygen amount. This is because the dissolved oxygen in the solution, which hinders a polymerization reaction, can be removed by stirring the polymerization raw material mixture liquid in the inert gas atmosphere, while suppressing the reaction of the polymerization initiator by cooling.

The degree of cooling the polymerization raw material mixture liquid after adding the polymerization initiator is not particularly limited. For example, the polymerization raw material mixture liquid is preferably cooled using a refrigerant at 0°C, such as an ice bath or the like.

The method for reducing the dissolved oxygen amount is not limited to the method of stirring the polymerization raw material mixture liquid in the inert gas atmosphere. For example, a method of performing ultrasonic radiation, a method of blowing an inert gas, such as nitrogen or the like, to the raw material mixture liquid, or the like can also be used. The inert gas is at least one selected from nitrogen and noble gases. Examples of the noble gases include helium, argon, and the like.

The oxygen reduction step may not be provided as a separate step, and may be performed as an oxygen reduction process in the polymerization step immediately before the addition of the coating resin raw material is started.

According to the method for producing the organic-inorganic hybrid infrared-absorbing particles of the present embodiment described above, organic-inorganic hybrid infrared-absorbing particles can be produced through the dispersion liquid preparation step using water as a dispersion medium. Specifically, the method for producing the organic-inorganic hybrid infrared-absorbing particles using water as a dispersion medium can be provided.

According to the method for producing the organic-inorganic hybrid infrared-absorbing particles of the present embodiment, organic-inorganic hybrid infrared-absorbing particles, in which an organic material, such as a resin or the like, is disposed on at least a part of surfaces of infrared-absorbing particles, can be produced. Thus, even when the organic-inorganic hybrid infrared-absorbing particles are exposed to a chemical environment, such as a high-temperature acid, alkali, or the like, the infrared-absorbing particles are inhibited from being directly in contact with a chemical component, such as an acid, an alkali, or the like. Thus, the organic-inorganic hybrid infrared-absorbing particles have excellent chemical resistance, and deterioration of infrared absorption properties can be prevented. In addition, according to the method for producing the organic-inorganic hybrid infrared-absorbing particles of the present embodiment, water is used as a dispersion medium in a production process, and therefore an amount of an organic solvent to be used can be minimized. Therefore, according to the method for producing the organic-inorganic hybrid infrared-absorbing particles of the present embodiment, an amount of an organic solvent, such as benzene, toluene, xylene, and ethylbenzene, in the coating resin, or at the surface of the coating resin, can be minimized.

[Organic-inorganic hybrid infrared-absorbing particles]

The organic-inorganic hybrid infrared-absorbing particles of the present embodiment will be described. The organic-inorganic hybrid infrared-absorbing particles of the present embodiment can be produced by the above-described method for producing the organic-inorganic hybrid infrared-absorbing particles. Thus, description of a part of the features, which have been already described, will be omitted.

The organic-inorganic hybrid infrared-absorbing particles of the present embodiment can include infrared-absorbing particles and a coating resin covering at least a part of surfaces of the infrared-absorbing particles.

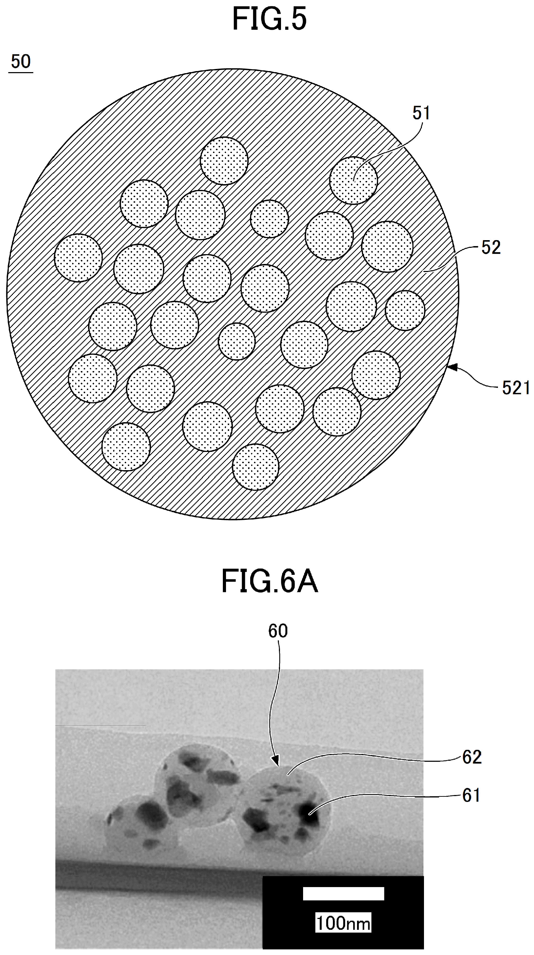

Fig. 5 illustrates a schematic cross-sectional view of the organic-inorganic hybrid infrared-absorbing particle 50 of the present embodiment. As illustrated in Fig. 5, in each organic-inorganic hybrid infrared-absorbing particle 50 of the present embodiment, the coating resin 52 is disposed on at least a part of the surfaces of the infrared-absorbing particles 51. Thus, the organic-inorganic hybrid infrared-absorbing particle 50 includes the infrared-absorbing particles 51 and the coating resin 52 encapsulating the infrared-absorbing particles 51.

In the case where each organic-inorganic hybrid infrared-absorbing particle 50 includes a plurality of infrared-absorbing particles 51, the coating resin 52 may encapsulate at least some of the infrared-absorbing particles 51. Thus, some of the infrared-absorbing particles 51 may be exposed from a surface of the organic-inorganic hybrid infrared-absorbing particle 50 without the surfaces of some of the infrared-absorbing particles 51 being completely covered with the coating resin 52.

The organic-inorganic hybrid infrared-absorbing particles of the present embodiment are not limited to the above configuration. For example, in the case where each of the organic-inorganic hybrid infrared-absorbing particles 50 of the present embodiment includes a plurality of infrared-absorbing particles 51, the coating resin 52 may encapsulate all the infrared-absorbing particles 51, and may completely cover the entire surfaces of the infrared-absorbing particles 51, as illustrated in Fig. 5. Specifically, as illustrated in Fig. 5, the coating resin 52 constitutes a resin capsule 521, and the infrared-absorbing particles are disposed inside the resin capsule 521, in each of the organic-inorganic hybrid infrared-absorbing particles 50 of the present embodiment. Specifically, the infrared-absorbing particles may be configured so that the entire surfaces of the infrared-absorbing particles are covered with the coating resin.

As illustrated in Fig. 5, a plurality of infrared-absorbing particles 51 may be disposed in one resin capsule 521. Alternatively, only one infrared-absorbing particle may be disposed in one resin capsule. In addition, the infrared-absorbing particles 51 may be unevenly distributed inside the resin capsule 521, but are preferably dispersed inside the resin capsule 521.

The organic-inorganic hybrid infrared-absorbing particle 50 illustrated in Fig. 5 is schematically illustrated merely

for the purpose of explanation, and the organic-inorganic hybrid infrared-absorbing particles of the present embodiment are not limited to the illustrated configuration. For example, shapes, sizes, and arrangement of the infrared-absorbing particles 51, a shape and arrangement of the coating resin 52, and the like are not limited to the illustrated configuration.

The organic-inorganic hybrid infrared-absorbing particles of the present embodiment may include spherical particles. The organic-inorganic hybrid infrared-absorbing particles of the present embodiment may be composed of spherical particles.

The organic-inorganic hybrid infrared-absorbing particles of the present embodiment can be produced by the method for producing the organic-inorganic hybrid infrared-absorbing particles according to one embodiment of the present disclosure. It is assumed that, according to the above production method, the surfactant can be adsorbed on the surfaces of the infrared-absorbing particles, the coating resin raw material can be supplied to the region in which the surfactant is adsorbed, and emulsification polymerization of the coating resin raw material can proceed in the region. Thus, the organic-inorganic hybrid infrared-absorbing particles of the present embodiment can be easily formed into spherical shapes.

The spherical shapes are not limited to true spherical shapes, and include ellipsoids and the like. In addition, the spherical shapes are not used to describe a strict geometrical meaning. For example, a case where an outer periphery is formed by one continuous and closed curve in any one cross-section of the organic-inorganic hybrid infrared-absorbing particle can be determined as a spherical shape.

Since the coating resin is disposed on the infrared-absorbing particle to cover at least a part of surfaces of the infrared-absorbing particles, even when the organic-inorganic hybrid infrared-absorbing particles are exposed to a chemical environment, such as a high-temperature acid, alkali, or the like, the infrared-absorbing particles are inhibited from being directly in contact with the chemical component, such as an acid, an alkali, or the like. Thus, the organic-inorganic hybrid infrared-absorbing particles of the present embodiment have excellent chemical resistance, and can prevent a reduction in infrared absorption properties.

Description of the infrared-absorbing particles will be omitted as the infrared-absorbing particles have already been described in the method for producing the organic-inorganic hybrid infrared-absorbing particles. However, for example, infrared-absorbing particles that include any material including free electrons are preferably used, and infrared-absorbing particles that include any inorganic material including free electrons are more preferably used.

As the infrared-absorbing particles, infrared-absorbing particles including at least one selected from a tungsten oxide having oxygen deficiency and a tungsten composite oxide are particularly preferably used. In this case, specifically, the infrared-absorbing particles ideally include, for example, at least one selected from the group consisting of a tungsten oxide represented by a general formula $W_yO_z$ (W: tungsten, O: oxygen, and $2.2 \leq z/y \leq 2.999$) and a tungsten composite oxide represented by a general formula $M_xW_yO_z$ (the element M is at least one selected from the group consisting of H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Hf, Os, Bi, and I, $0.001 \leq x/y \leq 1$, and $2.0 \leq z/y \leq 4.0$).

In addition, description of the coating resin will be omitted here, as the coating resin has been already described in the method for producing the organic-inorganic hybrid infrared-absorbing particles. For example, the coating resin may be at least one resin selected from the group consisting of thermoplastic resins, thermoset resins, photocurable resins, and the like. The coating resin particularly preferably includes at least one selected from the group consisting of a polyester resin, a polycarbonate resin, an acrylic resin, a polystyrene resin, a polyamide resin, a vinyl chloride resin, an olefin resin, a fluororesin, a polyvinyl acetate resin, a polyurethane resin, an acrylonitrile butadiene styrene resin, a polyvinyl acetal resin, an acrylonitrile-styrene copolymer resin, an ethylene-vinyl acetate copolymer resin, a phenol resin, an epoxy resin, a melamine resin, a urea resin, an unsaturated polyester resin, an alkyd resin, a polyimide resin, and a silicone resin. As the above polyurethane resin, both thermoplastic polyurethane and thermoset polyurethane can be used.

As the coating resin, the photocurable resin can also be suitably used. As the photocurable resin, a resin that is cured by irradiation with any light of ultraviolet rays, visible light, or infrared rays can be suitably used as described above.

Among the above, the coating resin is preferably a resin to which a radical polymerization method can be applied, and more preferably includes, for example, a polystyrene resin.

The average particle size of the organic-inorganic hybrid infrared-absorbing particles is not particularly limited, but is preferably 30 nm or greater and 1,000 nm or less, more preferably 50 nm or greater and 1,000 nm or less, and yet more preferably 80 nm or greater and 1,000 nm or less.

When the average particle size of the organic-inorganic hybrid infrared-absorbing particles is 30 nm or greater, the infrared-absorbing particles can be particularly easily encapsulated in the coating resin. In addition, when the average particle size of the organic-inorganic hybrid infrared-absorbing particles is 1,000 nm or less, handling can be improved when the organic-inorganic hybrid infrared-absorbing particles are used for various applications.

For the calculation of the average particle size of the organic-inorganic hybrid infrared-absorbing particles, TEM observation of the organic-inorganic hybrid infrared-absorbing particles is performed to determine major axis lengths of a plurality of organic-inorganic hybrid infrared-absorbing particles. Next, the major axis lengths of the evaluated organic-

inorganic hybrid infrared-absorbing particles are added together, and the resultant value is divided by the number of the evaluated organic-inorganic hybrid infrared-absorbing particles, thereby calculating an average particle size. Specifically, an average value (arithmetic mean) of the major axis lengths of the evaluated organic-inorganic hybrid infrared-absorbing particles can be determined as the average particle size of the organic-inorganic hybrid infrared-absorbing particles.

When the average particle size of the organic-inorganic hybrid infrared-absorbing particles is determined, the number of the organic-inorganic hybrid infrared-absorbing particles on which a major axis length is measured is not particularly limited. For example, the number of the organic-inorganic hybrid infrared-absorbing particles is preferably 5 or greater and 50 or less.

The organic-inorganic hybrid infrared-absorbing particles of the present embodiment can be produced by the method for producing the organic-inorganic hybrid infrared-absorbing particles according to one embodiment of the present disclosure. Thus, an amount of an organic solvent, such as benzene, toluene, xylene, and the like, can be minimized. The amount of the organic solvent, such as benzene, toluene, xylene, ethylbenzene, and the like in the organic-inorganic hybrid infrared-absorbing particles of the present embodiment is not particularly limited. For example, the percentage of the organic solvent, such as benzene, toluene, xylene, ethylbenzene, and the like in the organic-inorganic hybrid infrared-absorbing particles is preferably 2 percent by mass or less, more preferably 1.5 percent by mass or less, and yet more preferably 1 percent by mass or less. The above percentage is a mass percentage of a total amount of the organic solvents, such as benzene, toluene, xylene, ethylbenzene, and the like.

In addition, the organic-inorganic hybrid infrared-absorbing particles may be completely free of the organic solvent, such as benzene, toluene, xylene, ethylbenzene, and the like. Specifically, the amount of the organic solvent, such as benzene, toluene, xylene, ethylbenzene, and the like, can be 0.

In particular, a total concentration of benzene, toluene, xylene, and ethylbenzene included in the organic-inorganic hybrid infrared-absorbing particles of the present embodiment is preferably 10 ppm or less.

However, benzene, toluene, xylene, and ethylbenzene may be mixed in and incorporated into the organic-inorganic hybrid infrared-absorbing particles via the coating resin raw material or the like during a production process, and it may be difficult to completely reduce the amount of benzene, toluene, xylene, and ethylbenzene to 0. Therefore, the total concentration of benzene, toluene, xylene, and ethylbenzene in the organic-inorganic hybrid infrared-absorbing particles may be 1 ppb or greater.

Thus, the total concentration of benzene, toluene, xylene, and ethylbenzene in the organic-inorganic hybrid infrared-absorbing particles may be 1 ppb or greater and 10 ppm or less. The total concentration of benzene, toluene, xylene, and ethylbenzene is a total mass fraction of benzene, toluene, xylene, and ethylbenzene in the organic-inorganic hybrid infrared-absorbing particles. Therefore, ppb and ppm can also be denoted as mass ppb and mass ppm, respectively.

In the organic-inorganic hybrid infrared-absorbing particles of the present embodiment described above, the coating resin, which is an organic material, is disposed on at least a part of surfaces of the infrared-absorbing particles. Therefore, even when the organic-inorganic hybrid infrared-absorbing particles are exposed to a chemical environment, such as a high-temperature acid, alkali, or the like, the infrared-absorbing particles are inhibited from being directly in contact with a chemical component, such as an acid, an alkali, or the like. Thus, the organic-inorganic hybrid infrared-absorbing particles have excellent chemical resistance, and deterioration of infrared absorption properties can be inhibited. In addition, according to the organic-inorganic hybrid infrared-absorbing particles of the present embodiment, an amount of benzene, toluene, xylene, ethylbenzene, or the like serving as an organic solvent at a surface of or in the coating resin or the like can be minimized.

(Regarding applications of organic-inorganic hybrid infrared-absorbing particles)

Since the infrared-absorbing particles are covered with the resin, water or the like does not easily penetrate the organic-inorganic hybrid infrared-absorbing particles of the present embodiment, even when the organic-inorganic hybrid infrared-absorbing particles are exposed outdoors by being applied to windows, building materials, outer walls of buildings, materials of agriculture, forestry, and fishery industries, and the like. Therefore, an alkali or acid component is not guided into the coating resin by water, thereby inhibiting deterioration of infrared absorption properties of the infrared-absorbing particles.

The organic-inorganic hybrid infrared-absorbing particles of the present embodiment may be incorporated by being applied to or being kneaded into fibers of clothes or the like, cosmetics, structures, such as outdoor windows, outer walls, and the like, materials of agriculture, forestry, and fishery industries, or security materials. Thus, when the organic-inorganic hybrid infrared-absorbing particles of the present embodiment are used in the above various applications, the organic-inorganic hybrid infrared-absorbing particles can be utilized for infrared shielding by infrared absorption or photothermal conversion by infrared absorption.

EXAMPLES

The present invention will be specifically described through Examples hereinafter. However, the present invention is not limited to Examples below.

[Example 1]

Organic-inorganic hybrid infrared-absorbing particles were produced in the following manner according to the flow 120B depicted in Fig. 12B, and evaluation of the organic-inorganic hybrid infrared-absorbing particles was performed.

(1) Dispersion liquid preparation step (S1)

In the dispersion liquid preparation step, dispersion liquid raw materials including infrared-absorbing particles, a surfactant, and water were mixed to prepare a dispersion liquid.

As the infrared-absorbing particles, a tungsten composite oxide powder (YM-01, manufactured by Sumitomo Metal Mining Co., Ltd.) including hexagonal cesium tungsten bronze ($Cs_{0.33}WO_z$, $2.0 \leq z \leq 3.0$), in which the molar ratio of cesium (Cs) to tungsten (W) was Cs/W = 0.33, was prepared.

As the surfactant, cetyltrimethylammonium chloride (CTAC) was prepared.

Then, 30 g of the infrared-absorbing particles, 1.2 g of the surfactant, and 300 mL of pure water were mixed to obtain a mixture liquid, and the mixture liquid was placed in a paint shaker (Paint Shaker manufactured by SEIWA GIKEN Co., Ltd.) loaded with $ZrO_2$ beads having a diameter of 0.3 mm, and the mixture liquid was subjected to pulverization and dispersion for 10 hours (first mixing step (S11)). In the first mixing step, pulverization of the infrared-absorbing particles was simultaneously performed, thereby obtaining a precursor dispersion liquid.

The precursor dispersion liquid obtained by pulverizing and dispersing in the first mixing step was collected in an amount of 1 mL, and a 100-fold diluted solution of the collected precursor dispersion liquid with pure water was measured using a dynamic light scattering analyzer (nanoPartica SZ-100V, manufactured by HORIBA, Ltd.), thereby measuring the number average particle diameter of the infrared-absorbing particles.

In addition, a preliminary test was performed to determine a relationship between the number average particle diameter of the infrared-absorbing particles and the added amount (concentration) of the surfactant necessary for the surfactant to be adsorbed on the infrared-absorbing particles as a saturated bilayer and dispersing the infrared-absorbing particles in the dispersion medium. Then, based on the measured number average particle diameter of the infrared-absorbing particles and the result of the preliminary test, an added amount of the surfactant necessary for the surfactant to be adsorbed on the infrared-absorbing particles as a saturated bilayer, and a shortage in the added amount of the surfactant were calculated. An amount of the surfactant corresponding to the calculated shortage in the added amount of the surfactant was added to the precursor dispersion liquid (second mixing step (S12)).

It was confirmed that the zeta potential of the obtained dispersion liquid became positive by performing the second mixing step.

In the first mixing step and the second mixing step, 3.82 g of the surfactant was added in total.

(2) Polymerization raw material mixture liquid preparation step (S2)

To the dispersion liquid obtained in the dispersion liquid preparation step, 2,2'-azobis(2-methylpropionamidine) dihydrochloride (V-50) serving as a polymerization initiator was added and mixed.

The polymerization initiator was added so that the amount of the polymerization initiator was 2 mol% relative to a coating resin raw material to be added in the below-described polymerization step.

(3) Polymerization step (S3)

After the polymerization raw material mixture liquid preparation step, the polymerization raw material mixture liquid was subjected to nitrogen bubbling in an ice bath for 15 minutes, thereby performing an oxygen reduction process.

Then, while maintaining the polymerization raw material mixture liquid at 70°C in a nitrogen atmosphere, 2.0 g of styrene in total, which served as a coating resin raw material, was added dropwise to the polymerization raw material mixture liquid at a rate of 0.1 g per 30 minutes, thereby performing polymerization. The polymerization time was 16.5 hours. During the polymerization performed by dropwise addition of the coating resin raw material, a stirrer was placed in the polymerization raw material mixture liquid, and was constantly rotated at 500 rpm, thereby stirring the polymerization raw material mixture liquid.

The obtained dispersion liquid including the organic-inorganic hybrid infrared-absorbing particles was diluted, and the diluted dispersion liquid was transferred to a microgrid for TEM observation. Then, TEM observation of the

transferred product was performed. The TEM image is presented in Fig. 6A. It could be confirmed from the TEM image depicted in Fig. 6A that particles each including the tungsten composite oxide serving as the infrared-absorbing particles 61, which appeared in black, were encapsulated in a coating film of polystyrene serving as the coating resin 62, which appeared in gray, thereby forming the organic-inorganic hybrid infrared-absorbing particles 60. It was confirmed that spherical particles were included as the organic-inorganic hybrid infrared-absorbing particles 60.

In addition, a major axis length was measured on ten organic-inorganic hybrid infrared-absorbing particles in the obtained TEM image of the organic-inorganic hybrid infrared-absorbing particles. Then, an average value of the major axis lengths of the ten measured organic-inorganic hybrid infrared-absorbing particles was calculated to determine the average particle size. As a result, it was confirmed that the average particle size was 120 nm.

(Alkali resistance test)

To 4 g of a 0.01 mol/L sodium hydroxide solution maintained at 50°C, 1 g of the obtained organic-inorganic hybrid infrared-absorbing particle dispersion liquid was added. The resultant mixture was stirred for 60 minutes to perform an alkali resistance test.

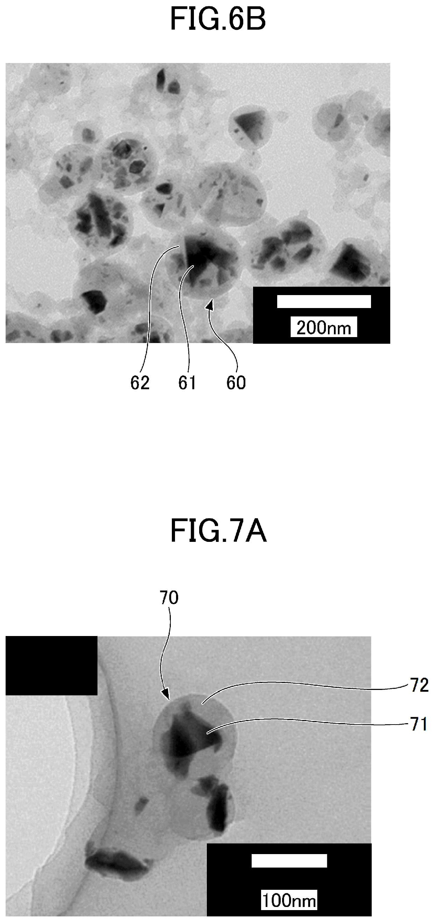

The dispersion liquid including the organic-inorganic hybrid infrared-absorbing particles after the alkali resistance test was diluted, and the diluted dispersion liquid was transferred to a microgrid for TEM observation. TEM observation of the transferred product was performed. The TEM image is presented in Fig. 6B. It was confirmed that, as depicted in Fig. 6B, the particles including the tungsten composite oxide, which served as the infrared-absorbing particles 61, were encapsulated in the coating film of the polystyrene serving as the coating resin 62 and appearing in gray, and the configuration of the organic-inorganic hybrid infrared-absorbing particles 60 was maintained even after the alkali resistance test.

The organic-inorganic hybrid infrared-absorbing particle dispersion liquid according to Example 1 had no change in color before and after the alkali resistance test. Specifically, it was confirmed that the organic-inorganic hybrid infrared-absorbing particle dispersion liquid according to Example 1 was colored blue due to the coloring of the particles including the tungsten composite oxide, which were included in the organic-inorganic hybrid infrared-absorbing particles, even after the alkali resistance test. It could be confirmed also from the color of the dispersion liquid that the tungsten composite oxide included in the organic-inorganic hybrid infrared-absorbing particles hardly reacted with the sodium hydroxide solution in the alkali resistance test.

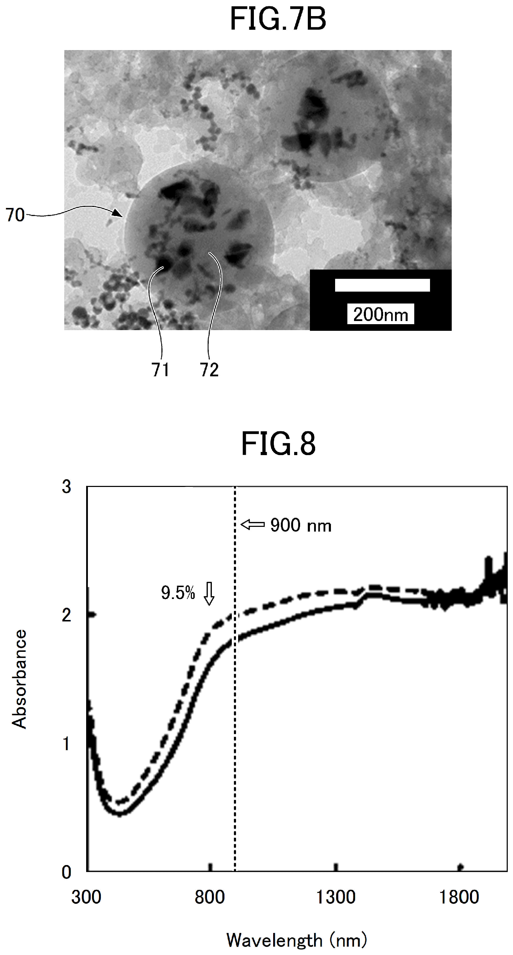

Further, the organic-inorganic hybrid infrared-absorbing particle dispersion liquid before and after the alkali resistance test was diluted 50-fold with pure water, followed by being subjected to measurement of optical properties. As a result, the absorption spectra depicted in Fig. 8 was obtained. In Fig. 8, the dotted line indicates the absorption spectrum of the organic-inorganic hybrid infrared-absorbing particle dispersion liquid before the alkali resistance test. In Fig. 8, the solid line indicates the absorption spectrum of the organic-inorganic hybrid infrared-absorbing particle dispersion liquid after the alkali resistance test.

It was confirmed that the absorbance attenuation rate calculated from the absorbance at the wavelength of 900 nm before and the after the alkali resistance test was 9.5%.

The optical properties of the organic-inorganic hybrid infrared-absorbing particle dispersion liquid were measured by placing the diluted organic-inorganic hybrid infrared-absorbing particle dispersion liquid in a glass cell for measurement with an optical path of 10 mm, and subjecting the organic-inorganic hybrid infrared-absorbing particle dispersion liquid to measurement using a spectrophotometer (U-4100, manufactured by Hitachi, Ltd.). The incident direction of light of the spectrophotometer was set to a direction perpendicular to the glass cell for measurement. The transmittance of a blank liquid measured by placing only pure water serving as a main solvent into a glass cell for measurement was used as a base line of the transmittance.

The absorbance attenuation rate can be calculated according to the following equation.

(Absorbance attenuation rate (%)) = [(absorbance before alkali resistance test) - (absorbance after alkali resistance test)] $\div$ (absorbance before alkali resistance test) $\times$ 100 · (1)

[Example 2]

Organic-inorganic hybrid infrared-absorbing particles according to Example 2 were obtained in the same manner as in Example 1, except that 2,2'-azobis(2-methyl-N-(2-hydroxyethyl)propionamide)(VA-086) was used as the polymerization initiator instead of 2,2'-azobis(2-methylpropionamidine) dihydrochloride (V-50), and VA-086 serving as the polymerization initiator was added at the proportion equivalent to 2.0 mol% relative to the styrene.

The obtained dispersion liquid including the organic-inorganic hybrid infrared-absorbing particles was diluted, and the diluted dispersion liquid was transferred to a microgrid for TEM observation. Then, a TEM observation of the transferred product was performed. The TEM image is presented in Fig. 7A. It could be confirmed from the TEM image

depicted in Fig. 7A that although many of the particles including the tungsten composite oxide serving as the infrared-absorbing particles 71 tended to be present outside the coating film of the polystyrene, the infrared-absorbing particles were encapsulated in the coating film of the polystyrene serving as the coating resin 72, thereby forming the organic-inorganic hybrid infrared-absorbing particles 70. It was confirmed that spherical particles were included as the organic-inorganic hybrid infrared-absorbing particles 70.

In addition, the organic-inorganic hybrid infrared-absorbing particles were subjected to the alkali resistance test under the same conditions as in Example 1.

The dispersion liquid including the organic-inorganic hybrid infrared-absorbing particles after the alkali resistance test was diluted, and the diluted dispersion liquid was transferred to a microgrid for TEM observation. TEM observation of the transferred product was performed. The TEM image is presented in Fig. 7B. It was confirmed that, as depicted in Fig. 7B, the particles including the tungsten composite oxide, serving as the infrared-absorbing particles 71, were encapsulated in the coating film of the polystyrene serving as the coating resin 72 and appearing in gray, and the configuration of the organic-inorganic hybrid infrared-absorbing particles 70 was maintained even after the alkali resistance test.

Although the blueness of the organic-inorganic hybrid infrared-absorbing particle dispersion liquid according to Example 2 became slightly reduced after the alkali resistance test compared with the color before the alkali resistance test, a significant color change was not observed. Specifically, it was confirmed that the organic-inorganic hybrid infrared-absorbing particle dispersion liquid according to Example 2 was colored blue due to the coloring of the particles including the tungsten composite oxide, which were included in the organic-inorganic hybrid infrared-absorbing particles, even after the alkali resistance test. It could be confirmed also from the color of the dispersion liquid that the tungsten composite oxide included in the organic-inorganic hybrid infrared-absorbing particles was inhibited from reacting with the sodium hydroxide solution in the alkali resistance test.

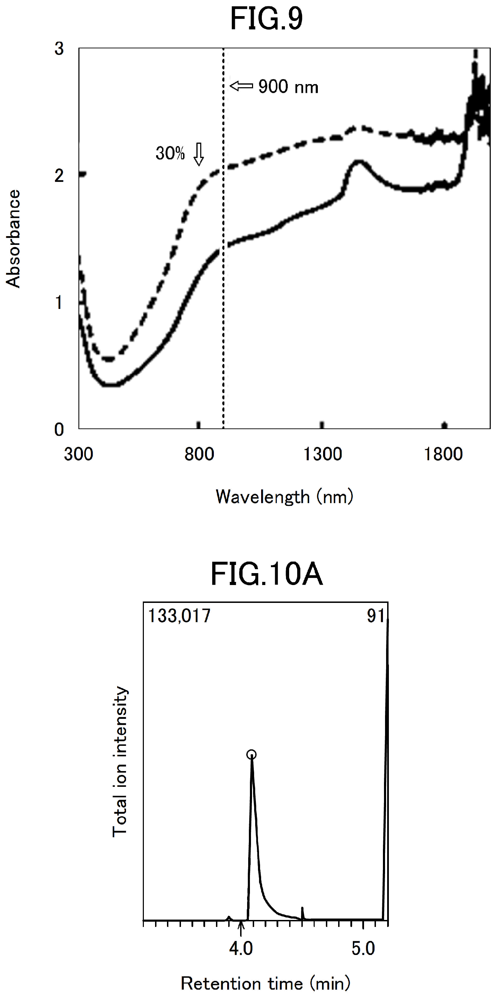

The organic-inorganic hybrid infrared-absorbing particle dispersion liquid before and after the alkali resistance test was diluted 50-fold with pure water, followed by being subjected to measurement of optical properties. The absorption spectra are presented in Fig. 9. In Fig. 9, the dotted line indicates the absorption spectrum of the organic-inorganic hybrid infrared-absorbing particle dispersion liquid before the alkali resistance test. In Fig. 9, the solid line indicates the absorption spectrum of the organic-inorganic hybrid infrared-absorbing particle dispersion liquid after the alkali resistance test.

It was confirmed that the absorbance attenuation rate calculated from the absorbance at the wavelength of 900 nm before and the after the alkali resistance test was 30.0%.

[Example 3]

Organic-inorganic hybrid infrared-absorbing particles were produced in the same conditions as in Example 1 in order to determine a total concentration of benzene, toluene, xylene, and ethylbenzene in the organic-inorganic hybrid infrared-absorbing particles.

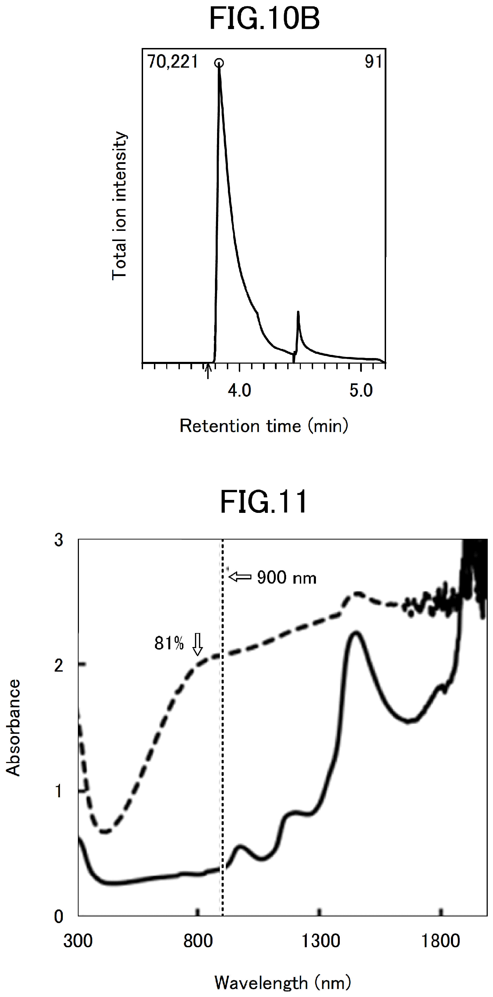

In the following description, a case of determining a concentration of benzene will be described as an example. The concentration of benzene in the obtained organic-inorganic hybrid infrared-absorbing particles was determined by a gas chromatograph mass spectrometer manufactured by Shimadzu Corporation equipped with a double-shot pyrolyzer manufactured by Japan Analytical Industry Co., Ltd. The pyrogram of the organic-inorganic hybrid infrared-absorbing particles in the present example is presented in Fig. 10A. In addition, a pyrogram of a toluene standard solution, which is an equivalent to 10 ppm of the residual toluene concentration in the organic-inorganic hybrid infrared-absorbing particles in a mass fraction, is depicted in Fig. 10B. It can be confirmed that the pyrogram of the organic-inorganic hybrid infrared-absorbing particles depicted in Fig. 10A has a significantly small peak area compared with the pyrogram of the toluene standard solution equivalent of the residual toluene concentration being 10 ppm depicted in Fig. 10B. Therefore, it could be confirmed that the concentration of the toluene remaining the organic-inorganic hybrid infrared-absorbing particles obtained in the present example was 10 ppm or less in mass fraction. The evaluation was also performed for benzene, xylene, and ethylbenzene, but all of benzene, xylene, and ethylbenzene was equal to or less than the detection limits. It was confirmed that a total concentration of benzene, toluene, xylene, and ethylbenzene in the organic-inorganic hybrid infrared-absorbing particles was 10 ppm or less in mass fraction.

[Comparative Example 1]

In the dispersion liquid preparation step, a dispersion liquid including infrared-absorbing particles and pure water was prepared.

As infrared-absorbing particles, a tungsten composite oxide powder (YM-01, manufactured by Sumitomo Metal Mining Co., Ltd.) including hexagonal cesium tungsten bronze ($Cs_{0.33}WO_z$, $2.0 \leq z \leq 3.0$), in which a ratio of an amount of substance of cesium (Cs) to an amount of substance of tungsten (W) was Cs/W = 0.33, was prepared.

Then, 10 percent by mass of the infrared-absorbing particles and 90 percent by mass of pure water were mixed to

obtain a mixture liquid, and the mixture liquid was placed in a paint shaker loaded with $ZrO_2$ beads having a diameter of 0.3 mm, and the mixture liquid was subjected to pulverization and dispersion for 10 hours, thereby obtaining a dispersion liquid of $Cs_{0.33}WO_z$ particles according to Comparative Example 1.

The pure water was removed from the dispersion liquid of the $Cs_{0.33}WO_z$ particles obtained in the dispersion liquid preparation step using an evaporator, thereby collecting the infrared-absorbing particles. The collected infrared-absorbing particles were provided as a dry powder of the $Cs_{0.33}WO_z$ particles.

The number average particle diameter of the collected infrared-absorbing particles, i.e., the $Cs_{0.33}WO_z$ particles, was measured, and the result was 32 nm.

The dispersion liquid of the $Cs_{0.33}WO_z$ particles according to Comparative Example was provided as it was as an infrared-absorbing particle dispersion liquid according to Comparative Example 1, and an alkali resistance test and evaluation of optical properties before and after the alkali resistance test were performed in the same manner as in Example 1. The absorption spectra are presented in Fig. 11. In Fig. 11, the dotted line indicates the absorption spectrum of the infrared-absorbing particle dispersion liquid before the alkali resistance test. In Fig. 11, the solid line indicates the absorption spectrum of the infrared-absorbing particle dispersion liquid after the alkali resistance test.

As a result, it was confirmed that the infrared-absorbing particles not having been subjected to organic-inorganic hybridization had an attenuation rate of 80% or greater at the wavelength of 900 nm and did not have alkali resistance.

Although the dispersion liquid of the $Cs_{0.33}WO_z$ particles according to Comparative Example 1 was colored blue before the alkali resistance test due to the coloring of the $Cs_{0.33}WO_z$ particles, the blueness disappeared and was turned to white after the alkali resistance test. It was confirmed from the color change of the dispersion liquid that the $Cs_{0.33}WO_z$ particles reacted with the sodium hydroxide solution in the alkali resistance test.

This application claims priority under Japanese Patent Application No. 2023-191985 filed November 10, 2023, the entire contents of Japanese Patent Application No. 2023-191985 are incorporated herein by reference.

REFERENCE SIGNS LIST

| | |
|---|---|
| 10 | unit cell |
| 11 | octahedron |
| 12 | void (tunnel) |
| 121 | element |
| 31 | infrared-absorbing particles |
| 32 | negative charge |
| 33 | surfactant |
| 33A | surfactant |
| 33B | surfactant |
| 331 | hydrophilic group |
| 40 | coating resin |
| 50 | organic-inorganic hybrid infrared-absorbing particles |
| 51 | infrared-absorbing particles |
| 52 | coating resin |
| 521 | resin capsule |
| 60 | organic-inorganic hybrid infrared-absorbing particles |
| 61 | infrared-absorbing particles |
| 62 | coating resin |
| 70 | organic-inorganic hybrid infrared-absorbing particles |
| 71 | infrared-absorbing particles |
| 72 | coating resin |
| 120A | flow |
| 120B | flow |
| S1 | dispersion liquid preparation step |
| S11 | first mixing step |
| S12 | second mixing step |
| S2 | polymerization raw material mixture liquid preparation step |
| S3 | polymerization step |

## Claims

1. A method for producing organic-inorganic hybrid infrared-absorbing particles, the method comprising:

   a dispersion liquid preparation step of mixing dispersion liquid raw materials including infrared-absorbing particles, a surfactant, and water to prepare a dispersion liquid;
   a polymerization raw material mixture liquid preparation step of mixing the dispersion liquid and a polymerization initiator to prepare a polymerization raw material mixture liquid; and
   a polymerization step of adding a coating resin raw material to the polymerization raw material mixture liquid to cause a polymerization reaction to proceed.

2. The method for producing the organic-inorganic hybrid infrared-absorbing particles according to claim 1, wherein the surfactant is a cationic surfactant.

3. The method for producing the organic-inorganic hybrid infrared-absorbing particles according to claim 2, wherein the cationic surfactant is a quaternary ammonium salt.

4. The method for producing the organic-inorganic hybrid infrared-absorbing particles according to claim 2 or 3, wherein the cationic surfactant includes a base that includes a halogen element.

5. The method for producing the organic-inorganic hybrid infrared-absorbing particles according to any one of claims 1 to 3,
   wherein the surfactant includes an alkyl group.

6. The method for producing the organic-inorganic hybrid infrared-absorbing particles according to any one of claims 1 to 3,
   wherein the dispersion liquid preparation step includes mixing of the dispersion liquid raw materials while pulverizing the infrared-absorbing particles using a pulverizing device.

7. The method for producing the organic-inorganic hybrid infrared-absorbing particles according to any one of claims 1 to 3,
   wherein the dispersion liquid preparation step includes:

   a first mixing step of mixing the dispersion liquid raw materials to prepare a precursor dispersion liquid; and
   a second mixing step of further adding the surfactant to the precursor dispersion liquid to prepare the dispersion liquid.

8. The method for producing the organic-inorganic hybrid infrared-absorbing particles according to claim 7,
   wherein the second mixing step includes selecting of an amount of the surfactant to be added so that a zeta potential of the dispersion liquid becomes positive after adding the surfactant to the precursor dispersion liquid.

9. The method for producing the organic-inorganic hybrid infrared-absorbing particles according to any one of claims 1 to 3,
   wherein the polymerization step includes adding of the coating resin raw material to the polymerization raw material mixture liquid several times.

10. The method for producing the organic-inorganic hybrid infrared-absorbing particles according to any one of claims 1 to 3,
    wherein the coating resin raw material is continuously added to the polymerization raw material mixture liquid during the polymerization step.

11. The method for producing the organic-inorganic hybrid infrared-absorbing particles according to any one of claims 1 to 3,
    wherein the infrared-absorbing particles includes at least one selected from the group consisting of a tungsten oxide represented by a general formula $W_yO_z$ (W: tungsten, O: oxygen, and $2.2 \leq z/y \leq 2.999$) and a tungsten composite oxide represented by a general formula $M_xW_yO_z$ (an element M is at least one selected from the group consisting of H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo,

Ta, Re, Hf, Os, Bi, and I, $0.001 \leq x/y \leq 1$, and $2.0 \leq z/y \leq 4.0$).

**12.** Organic-inorganic hybrid infrared-absorbing particles, comprising:

infrared-absorbing particles; and
a coating resin encapsulating the infrared-absorbing particles.

**13.** The organic-inorganic hybrid infrared-absorbing particles according to claim 12, wherein the organic-inorganic hybrid infrared-absorbing particles include spherical particles.

**14.** The organic-inorganic hybrid infrared-absorbing particles according to claim 12 or 13, wherein the coating resin includes at least one selected from the group consisting of a polyester resin, a polycarbonate resin, an acrylic resin, a polystyrene resin, a polyamide resin, a vinyl chloride resin, an olefin resin, a fluororesin, a polyvinyl acetate resin, a polyurethane resin, an acrylonitrile butadiene styrene resin, a polyvinyl acetal resin, an acrylonitrile-styrene copolymer resin, an ethylene-vinyl acetate copolymer resin, a phenol resin, an epoxy resin, a melamine resin, a urea resin, an unsaturated polyester resin, an alkyd resin, a polyimide resin, and a silicone resin.

**15.** The organic-inorganic hybrid infrared-absorbing particles according to claim 12 or 13, wherein the infrared-absorbing particles include at least one selected from the group consisting of a tungsten oxide represented by a general formula $W_yO_z$ (W: tungsten, O: oxide, and $2.2 \leq z/y \leq 2.999$) and a tungsten composite oxide represented by a general formula $M_xW_yO_z$ (element M is at least one selected from the group consisting of H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Hf, Os, Bi, and I, $0.001 \leq x/y \leq 1$, and $2.0 \leq z/y \leq 4.0$).

**16.** The organic-inorganic hybrid infrared-absorbing particles according to claim 12 or 13, wherein a total concentration of benzene, toluene, xylene, and ethylbenzene is 10 ppm or less.

# FIG.1

10
11
12
121

FIG.2

Hydrodynamic diameters of infrared-absorbing particles (nm)
0
200
400
600
800
1000
1200
Zeta-potential (mV)
+60
+40
+20
0
-20
-40
-60
-80
0
2.5
5
7.5
10
12.5
15
17.5
Concentration of surfactant relative to infrared-absorbing particles (percent by mass)
$D_H$
Zeta-potential

FIG.3A

32
31

FIG.3B

331
33(33A)
32
31

FIG.3C

331
33(33B)
33(33A)
31

FIG.4

331
33(33B)
33(33A)
40
31

FIG.5

50
51
52
521

FIG.6A

60
62
61
100nm

# FIG.6B

200nm
62
61
60

# FIG.7A

70
72
71
100nm

FIG.7B

70
71
72
200nm

FIG.8

900 nm
9.5%
Absorbance
Wavelength (nm)
3
2
1
0
300
800
1300
1800

FIG.9

3
2
1
0
Absorbance
900 nm
30%
300
800
1300
1800
Wavelength (nm)


FIG.10A

133,017
91
Total ion intensity
4.0
5.0
Retention time (min)

# FIG.10B

70,221
91
Total ion intensity
4.0
5.0
Retention time (min)

# FIG.11

3
2
1
0
900 nm
81%
Absorbance
300
800
1300
1800
Wavelength (nm)

FIG.12A

120A
START
S1
DISPERSION LIQUID PREPARATION STEP
S2
POLYMERIZATION RAW MATERIAL MIXTURE LIQUID PREPARATION STEP
S3
POLYMERIZATION STEP
END

# FIG.12B

120B
START
S1
S11
FIRST STEP
S12
SECOND STEP
S2
POLYMERIZATION RAW MATERIAL MIXTURE LIQUID PREPARATION STEP
S3
POLYMERIZATION STEP
END

**INTERNATIONAL SEARCH REPORT**

International application No. **PCT/JP2024/039491**

**A. CLASSIFICATION OF SUBJECT MATTER**

***C09K 3/00***(2006.01)i; ***C01G 41/00***(2006.01)i; ***C08F 2/44***(2006.01)i; ***C08F 292/00***(2006.01)i; ***C08K 3/01***(2018.01)i; ***C08K 3/22***(2006.01)i; ***C08L 101/00***(2006.01)i; ***C09C 1/00***(2006.01)i; ***C09C 3/10***(2006.01)i

FI: C09K3/00 105; C09C3/10; C09C1/00; C08K3/01; C08K3/22; C08L101/00; C08F292/00; C08F2/44 A; C01G41/00

According to International Patent Classification (IPC) or to both national classification and IPC

**B. FIELDS SEARCHED**

Minimum documentation searched (classification system followed by classification symbols)

C09K3/00; C01G41/00; C08F2/44; C08F292/00; C08K3/01; C08K3/22; C08L101/00; C09C1/00; C09C3/10

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

JSTPlus/JMEDPlus/JST7580 (JDreamIII); CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2020/129919 A1 (SUMITOMO METAL MINING CO., LTD.) 25 June 2020 (2020-06-25) claims, paragraphs [0106]-[0145], etc. | 12-16 |
| A | claims, paragraphs [0106]-[0145], etc. | 1-11 |
| X | JP 2004-161792 A (HITACHI CHEMICAL COMPANY, LTD.) 10 June 2004 (2004-06-10) claims, paragraphs [0075]-[0081], etc. | 12-14, 16 |
| A | claims, paragraphs [0075]-[0081], etc. | 1-11, 15 |
| A | WO 2016/056319 A1 (KONICA MINOLTA, INC.) 14 April 2016 (2016-04-14) claims, paragraphs [0031]-[0040], etc. | 1-16 |
| A | WO 2019/093524 A1 (SUMITOMO METAL MINING CO., LTD.) 16 May 2019 (2019-05-16) claims, paragraphs [0099]-[0135], etc. | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 January 2025** | **21 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/039491**

| Patent document cited in search report | Publication date (day/month/year) | Patent family member(s) | Publication date (day/month/year) |
|---|---|---|---|
| WO 2020/129919 A1 | 25 June 2020 | US 2022/0049105 A1 claims, paragraphs [0136]-[0189], etc. | |
| | | EP 3901098 A1 | |
| | | CN 113195410 A | |
| | | KR 10-2021-0102253 A | |
| JP 2004-161792 A | 10 June 2004 | (Family: none) | |
| WO 2016/056319 A1 | 14 April 2016 | (Family: none) | |
| WO 2019/093524 A1 | 16 May 2019 | US 2021/0047518 A1 claims, paragraphs [0204]-[0249], etc. | |
| | | EP 3712223 A1 | |
| | | CN 111373011 A | |
| | | KR 10-2020-0084323 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005037932 A
- WO 2020129919 A
- JP 2023191985 A